# EUROPEAN PATENT SPECIFICATION

(11) **EP 3 708 481 B1**
(45) Date of publication and mention of the grant of the patent: **30.11.2022**
(21) Application number: 20153674.5
(22) Date of filing: 24.01.2020
(51) Int. Cl.: B63H 23/35, F16D 55/00, B63H 5/125

(54) **PROPULSION POD COMPRISING MOVABLE BRAKE CALLIPER**
ANTRIEBSGONDEL MIT BEWEGLICHEM BREMSSATTEL
NACELLE DE PROPULSION COMPRENANT UN ÉTRIER DE FREIN MOBILE

(30) Priority: 15.03.2019 SE 1950328
(43) Date of publication of application: 16.09.2020
(73) Proprietor: Kongsberg Maritime Sweden AB, 681 29 Kristinehamn (SE)
(72) Inventor: ERIKSSON, Andreas, SE-681 29 KRISTINEHAMN (SE); NILSSON, Tomas, SE-681 29 KRISTINEHAMN (SE)
(74) Representative: Bjerkén Hynell KB

(56) References cited:
- WO-A1-2018/029180
- AT-B- 379 350
- GB-A- 1 601 294
- GB-A- 2 138 520
- JP-A- 2012 116 248
- US-A- 4 823 920
- US-A1- 2010 018 814

## Description

### TECHNICAL FIELD

The present invention relates to ship technology. In particular, a propulsion pod for housing a drive shaft connectable to a marine propulsion motor, the propulsion pod comprising a brake system, is disclosed.

### BACKGROUND

Within ship technology, propulsion pods are provided to increase the manoeuvrability of watercraft, such as ships, vessels, boats, flatboats, cargo platforms and the like.

A known propulsion pod for mounting at a hull of a ship typically comprises a housing in which a drive shaft is provided. At one end of the drive shaft, a propeller is fixedly fastened such that the propeller rotates when the drive shaft rotates. The propeller can be replaced by a pump, a jet or the like. The other end of the drive shaft is connectable to a marine propulsion motor. The marine propulsion motor can be enclosed in the housing of the propulsion pod or it may be located e.g. in a motor compartment of the ship while been connected to the drive shaft by means of various connection shafts, and appropriate joints such as cardan joints or the like.

In order to stop the rotation of the drive shaft, or to reduce rotational speed of the drive shaft, a brake system, comprising a brake disc fixedly attached to the drive shaft, may be arranged within the propulsion pod. The brake system can also be used to prevent the drive shaft from rotating, e.g. due to external loads, such as water currents or the like. The axes of rotation of the brake disc and the drive shaft coincide due to concentric attachment of the brake disc with respect to the drive shaft. In order to achieve braking functionality, a calliper is arranged to allow the brake disc to be gripped and released, typically by means of hydraulic activation means acting on brake pads held by the calliper. During operation the calliper is able to grip the brake disc and the calliper hence overlaps the brake disc. That is, the brake disc is partly surrounded by the calliper body.

A problem related to maintenance of the brake system is that it is cumbersome to access the brake system in order to e.g. replace brake pads held by the calliper or to remove the drive shaft and the brake disc. Removal of the drive shaft requires removal of the calliper, whereby it no longer overlaps the brake disc. In some cases, it may be even more cumbersome to perform maintenance, e.g. due to that the propeller and/or bearings and/or the shaft may need to be removed. Normally the calliper is mounted in the pod by a first bolt or shaft at one end of the calliper body and a second shaft or bolt at the other end of the calliper. Removal of both of the first and second bolts allows complete removal of a calliper. However, access to the brake calliper may be limited and may require significant time and effort to extensively disassemble the propulsion pod to access parts such as the first and second bolts and the calliper itself so that the calliper can be removed.

JP2012116248A discloses an azimuth propeller that includes a horizontal driving shaft for transmitting driving force from a power source, a ship inside bevel gear unit for converting the transmission direction of the driving force, a vertical driving shaft for transmitting the driving force from the ship inside bevel gear unit, a pod inside bevel gear unit for converting the transmission direction of the driving force from the vertical driving shaft, a propeller shaft for transmitting the driving force from the pod inside bevel gear unit, and the propeller connected to the propeller shaft. The pod inside bevel gear unit has a double cylinder meshing the inner peripheral side with the outer peripheral side of the vertical driving shaft, a vertical bevel gear for forward rotation and a vertical bevel gear for reverse rotation for meshing the inner peripheral side with the outer peripheral side of the double cylinder, and a bevel gear for a propelling shaft for meshing with the outer peripheral side of any one vertical bevel gears, and any one of the vertical bevel gears meshes with the double cylinder by moving the double cylinder in the vertical direction when transmitting the driving force.

### SUMMARY

An objective of the present invention is to facilitate maintenance of a propulsion pod of the abovementioned kind. In particular, an object is to facilitate maintenance of a brake system, mounted in an inaccessible space of such propulsion pod.

According to an aspect of the invention, this object may be achieved by a propulsion pod with a drive shaft having a central longitudinal axis, wherein the pod comprises a wall for rotatably mounting the drive shaft, wherein the drive shaft is provided with a brake disc and the pod comprises a calliper shaft extending through the wall, and a brake calliper, mounted on the calliper shaft, wherein the brake calliper is movable between a first, operational position and a second, maintenance position by rotation and/or translation of the calliper shaft. Furthermore, the brake calliper is, in the first position, arranged to allow braking and/or holding of the drive shaft and the brake disc. The brake calliper is further, in the second position, arranged to allow movement of at least one of the brake calliper and the drive shaft together with the brake disc in a direction which is parallel with, or possibly coaxial with, the central longitudinal axis of the drive shaft.

The brake calliper is thus movable, i.e. rotatable and/or translatable, e.g. predominantly in a plane of the brake disc, by means of the calliper shaft. The calliper shaft is typically separate from and parallel to the drive shaft. The calliper shaft is actuatable from an accessible face of the wall of the propulsion pod thanks to that the calliper shaft extends through the wall. In this manner, when the calliper shaft is actuated, the calliper shaft is rotated and/or translated to cause the brake calliper to move between the first and second positions. When the brake calliper is arranged in the second position, maintenance of the propulsion pod is facilitated thanks to that the drive shaft and the brake disc may be removed from, or inserted into, the propulsion pod without extensive disassembly, such as dismounting of the brake calliper. As a result, the abovementioned objective is achieved.

In some embodiments of the invention, the wall may comprise a circular through hole for rotatable mounting of a calliper shaft with a circular cross-section where it passes through said circular through hole. Advantageously, rotation of the calliper shaft is facilitated thanks to the circular through hole of the wall.

The brake calliper is preferably fixedly mounted on the calliper shaft to prevent rotation thereof with respect to the calliper shaft. However, for practical reasons, it may be necessary to have a removable calliper shaft or a calliper shaft mounted in a manner which allows a limited amount of rotation of the shaft with respect to the brake calliper However, in such cases when the brake calliper is not fixedly mounted on the calliper shaft, rotation of the calliper shaft still causes rotation of the brake calliper, possibly with a slight delay due to some play between the calliper shaft and the brake calliper, so that the calliper shaft may be moved between the first and second positions by means of the portion of the calliper shaft that is projecting through the wall on the opposite side of the wall to the brake calliper.

In some other embodiments of the invention, the wall may be provided with at least one slot for guiding the calliper shaft when the brake calliper is displaced between the first and second positions. Advantageously, translation of the calliper shaft is facilitated thanks to that said at least one slot snuggly fits to the calliper shaft while still allowing the calliper shaft to be smoothly conveyed in said at least one slot.

The direction of aforementioned movement of the brake calliper may be towards and beyond the wall when the brake calliper and the calliper shaft are demounted from the propulsion pod. In this manner, the brake calliper and the calliper shaft may be extracted from an inaccessible compartment of the propulsion pod to allow easy access thereto as compared to when the brake calliper and the calliper shaft (at least portions thereof) remains to be located within the inaccessible compartment. Accordingly, maintenance of the calliper shaft and/or the brake calliper, such as replacement of brake pads, is facilitated.

The direction of said movement, when referring to movement of the drive shaft and/or brake disc, may be away from the wall when the drive shaft and the brake disc are removed from the propulsion pod. In this manner, the drive shaft and/or brake disc may be extracted from the propulsion pod to allow easy access thereto as compared to when the drive shaft and/or brake disc are located within the propulsion pod. Thus, maintenance of the drive shaft and/or brake disc is facilitated.

The direction of said movement, for purposes of re-installing the drive shaft and the brake disc into the propulsion pod after inspection and/or maintenance, may be towards the wall. Once e.g. maintenance has been performed on the drive shaft and/or brake disc, insertion thereof may be performed in order to put the propulsion pod in a state ready for operation. By means of the calliper shaft the brake calliper may be rotated and/or translated into the first position for allowing braking of brake disc.

In order to prevent the brake calliper from unintentional rotation and/or unintentional displacement between the first and second positions, the brake calliper is preferably lockable in the first position and/or in the second position.

The calliper shaft may be mounted in the wall at a radial position which is outside the outer circumference of the brake disc and it may be parallel to the drive shaft. A gap between the calliper shaft and the outer circumference of the brake disc allows the brake disc to rotate freely without interfering with the calliper shaft. Alternatively, the calliper shaft may be mounted in the wall at a radial position which is inside the outer circumference of the brake disc. It may then be provided with an arm or other projection extending in the radial direction upon which the calliper is mounted so that rotation of the calliper shaft will move the calliper from the first position to the second position.

According to some embodiments of the invention, the wall may have at least one portion that is demountable, wherein said at least one portion is adapted to allow at least the brake calliper to pass therethrough. Advantageously, the brake calliper may be extracted from an otherwise inaccessible compartment of the pod, whereby maintenance thereof may be facilitated.

In some embodiments of the invention, the calliper shaft and the brake calliper may be formed as an integral unit. Thus, the propulsion pod may comprise a calliper arrangement formed by the brake calliper and the calliper shaft. Hence, the calliper arrangement comprises a first portion, such as the calliper shaft or the like, immovably joined to a second portion, such as the brake calliper or the like. The calliper shaft projects from the brake calliper, preferably perpendicular to the central longitudinal axis of the calliper body so that in use the calliper shaft can extend through an internal wall of the propulsion pod.

### BRIEF DESCRIPTION OF THE DRAWINGS

The various aspects of embodiments disclosed herein, including particular features and advantages thereof, are explained in the following detailed description and the accompanying drawings.
Figure 1a and Figure 1b are cross-sectional views of exemplifying propulsion pods according to the embodiments herein.
Figure 2 is a further cross-sectional view of a portion of the exemplifying propulsion pod according to the embodiments herein.
Figures 3 to 6 are cross-sectional views illustrating different positions and/or movements by translation and/or rotation of a brake calliper of a propulsion pod according to the embodiments herein.
Figure 7 and 8 are further cross-sectional views illustrating different positions and/or movements by translation and/or rotation of the brake calliper of a propulsion pod according to the embodiments herein.

### DETAILED DESCRIPTION

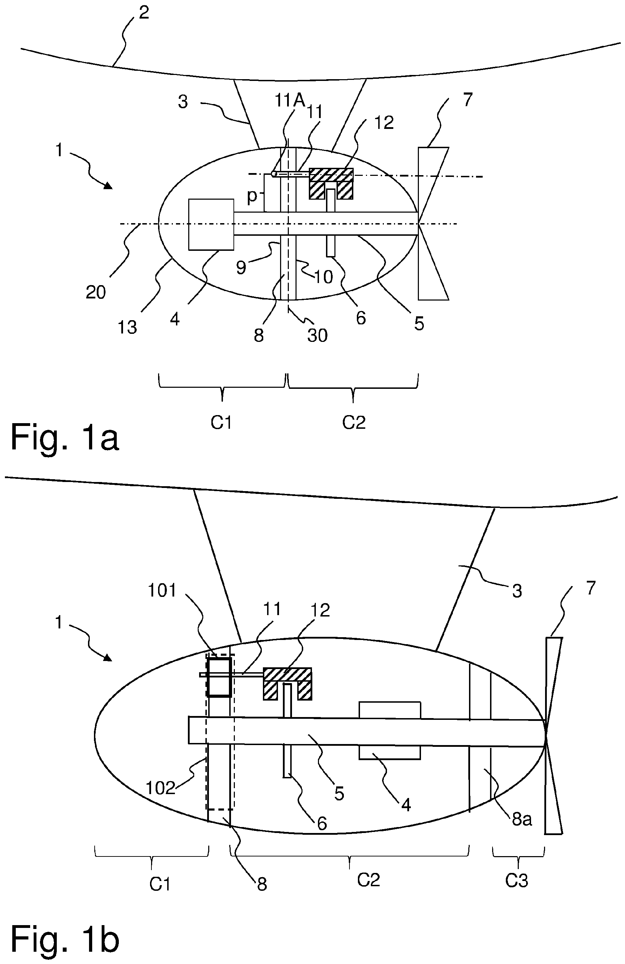

Figure 1a illustrates an exemplifying propulsion pod 1, with a brake system in accordance with the present invention, typically arranged at a hull 2 of a watercraft. The propulsion pod 1 may be mounted at the hull 2 via a connecting structure 3. Alternatively, the propulsion pod 1 may be formed as an integral unit of the hull 2 (not illustrated in the Figure).

The propulsion pod 1 may further comprise a propulsion motor 4 connectable to a drive shaft 5. However, in some examples, the propulsion motor 4, such as a marine propulsion motor or the like, may be located in the hull 2. In these examples, the propulsion motor 4 may be connected to the drive shaft 5, e.g. via one or more connection shafts, possibly provided with rotatable joints, such as, fixed or flexible couplings, cardan joints, bevel gears or the like.

The drive shaft 5 is provided with a coaxially-mounted brake disc 6 for enabling braking of the drive shaft 5. At a distal end of the drive shaft 5, a propulsion means 7, such as a propeller of the like, may be mounted. In some examples, the drive shaft 5 and the brake disc 6 may be formed as one unit, i.e. the brake disc 6 is integrated with the drive shaft 5.

Furthermore, the propulsion pod 1 comprises a wall 8 for mounting the drive shaft 5, which may or may not extend, at least partially, through the wall 8 e.g. for connection to the propulsion motor 4. For example, only a part of the drive shaft 5 may protrude through the wall 8 to facilitate support of a bearing, which is provided in the wall 8 and which surrounds the drive shaft 5. The drive shaft 5 has an exterior end that is connected to the propeller 7 and an interior end of the drive shaft 5 may be directly or indirectly connectable to the propulsion motor 4.

The wall 8 has a first face 9 and a second face 10.

For some maintenance work, other than the maintenance of the drive shaft 5 and the brake disc 6, it may be required to remove the wall 8. In order to be able to remove the wall 8, it is required that the drive shaft 5 as well as the brake disc 6 are removed first. Hence, the embodiments herein also facilitate disassembly, e.g. removal or the like, of the wall 8.

As illustrated in Figure 1a or Figure 1b, the propulsion pod 1 houses, or encloses, the drive shaft 5 that may be connectable to the propulsion motor 4. The propulsion pod may comprise a housing 13, e.g. having an elongated shape, preferably a streamlined shape. The wall 8 divides the housing 13 into a first portion C1 and a second portion C2. The first and second portions C1, C2 refer to a respective space of a volume enclosed by the housing 13. Typically, only the first portion C1 of the propulsion pod 1 is easily accessible, e.g. by maintenance personnel, a mechanic, an engineer, an operator or the like, during maintenance of the propulsion pod 1. In contrast to the first portion C1, the second portion C2 of the propulsion pod 1 is hence in general not accessible, e.g. it may require substantial demounting of the propulsion pod 1 should access to the second portion C2 be required.

The propulsion pod 1 comprises a calliper shaft 11 extending through the wall 8. Thanks to that the calliper shaft 11 extends through the wall 8, the one end of calliper shaft 11 is accessible during maintenance from the first portion C1. In more detail, a portion of the calliper shaft 11 may typically be accessible at the first face 9 of the wall 8. The elongated calliper shaft 11 has a central longitudinal axis which preferably is offset to the drive shaft 5 and parallel to the central longitudinal axis of the drive shaft 5. In order to allow turning of the calliper shaft 11 around its central longitudinal axis, the calliper shaft end in the first portion C1 may be provided with flats, or other similar gripping structures for e.g. an Allen wrench, to allow it to be gripped by a wrench or other tool or, as shown in Figures 1-4. It can, alternatively or additionally, be provided with a laterally extending handle 11A which can be manually rotated. In this way, the calliper 12 which is mounted on the calliper shaft 11 in the second portion C2 on one side of the wall can be rotated into different positions by rotation of the portion of the calliper shaft which is arranged in the portion C1 on the other side of the wall. This means that access to only the first portion C1 is needed to move the brake calliper 12 between different positions, thereby avoiding the need to have access, by e.g. a hand of an engineer, to the second portion C2 of the housing.

Furthermore, the brake calliper 12 may face the second face 10 of the wall 8 and the propulsion motor 4, if arranged inside the propulsion pod 1, may be on the other side of the wall and thus faces the first face 9 of the wall 8.

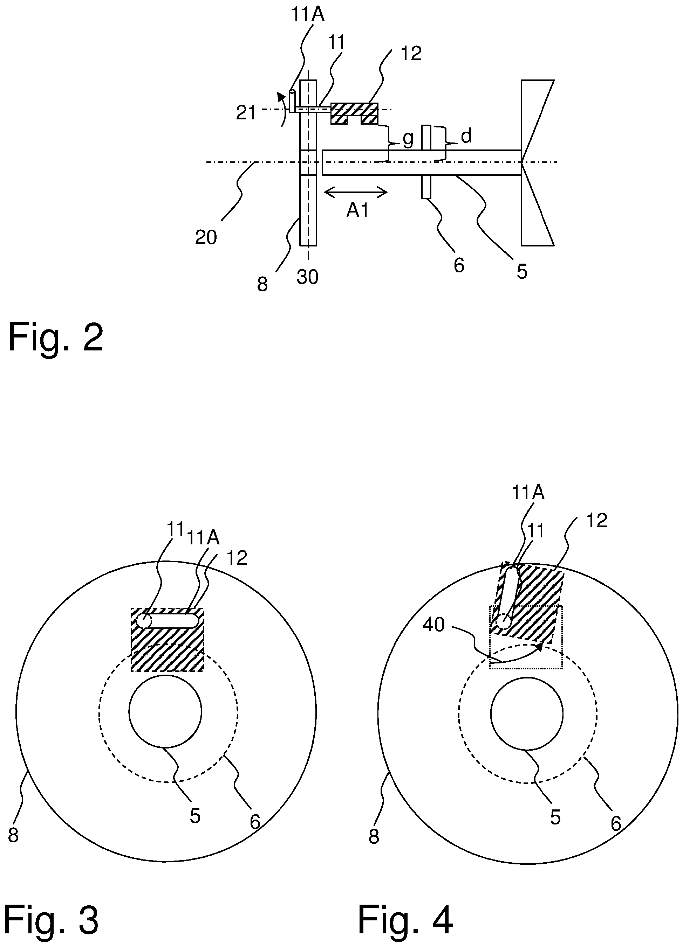

The propulsion pod 1 further comprises a brake calliper 12, mounted on the calliper shaft 11. The brake calliper 12 may be fixedly mounted, e.g. by welding, soldering, glue, interference fit, threaded fastening means and/or the like, on the calliper shaft 11. The brake calliper 12 is movable between a first position overlapping the brake disc when seen from a position looking along the drive shaft 5 and a second position where it does not overlap the brake disc. As shown in Figures 3 to 6, this can be achieved by rotation of the calliper shaft 11 and/or translation of the calliper shaft 11, to a position which is further away from the central longitudinal axis of drive shaft 5. In this manner, actuation i.e. rotation and/or translation, of the calliper shaft 11 causes the brake calliper 12 to move between the first and second positions.

In some examples, some play between the brake calliper 12 and the calliper shaft 11 may be allowed as long as the calliper shaft 11 may engage with the brake calliper 12 when the calliper shaft 11 is rotated and/or translated. The brake calliper 12 and the calliper shaft 11 shall be interconnected such that manipulation of the calliper shaft 11 ensures proper movement of the brake calliper 12 between the first and second positions, e.g. by translation and/or rotation of the brake calliper 12.

The calliper shaft 11 and the brake calliper 12 may be formed as an integral unit. In this configuration the propulsion pod 1 comprises a calliper arrangement formed by the calliper shaft 11 and the brake calliper 12. The calliper shaft 11 projects from the brake calliper 12 and can e.g. project through the wall 8 of the propulsion pod 1 to enable it to be operated from the opposite side of the wall 8 from that side which the calliper 12 faces.

When the calliper shaft 11 is rotated, the brake calliper 12 is caused to rotate in synchrony with the calliper shaft 11 about a central longitudinal axis of the calliper shaft 11.

When the calliper shaft 11 is displaced, the brake calliper 12 is caused to move substantially in the same manner as the calliper shaft 11, e.g. away from, or towards, the central longitudinal axis 20 of the drive shaft 5.

When the calliper shaft 11 is rotated and displaced, the brake calliper 12 follows a path determined by the rotation and translation of the calliper shaft 11.

In the first position, the operational position, the brake calliper 12 is arranged to allow at least one of braking and holding of the drive shaft 5, e.g. due to brake pads (not shown) being pressed against the brake disc 6. As a consequence, in the first position, the brake calliper 12 is thus also arranged to prevent movement of the drive shaft 5 and the brake disc 6 in the direction of the central longitudinal axis 20 of the drive shaft 5. Expressed differently, when arranged in the first position, the brake calliper 12 is arranged to allow the brake disc 6 to be gripped and released in order to enable braking of the drive shaft 5 and the brake disc 6.

In the second position, or the maintenance position, the brake calliper 12 is arranged to allow at least one of the brake calliper 12 and the drive shaft 5 together with the brake disc 6 to be removed and/or inserted into the propulsion pod 1 e.g. for maintenance purposes. The drive shaft 5 is rotatably mounted in the wall 8, e.g. by means of a bearing (not shown). This means that, in the second position, the brake calliper 12 is arranged to allow movement of at least one of the brake calliper 12 and the drive shaft 5 together with the brake disc 6 in a direction which is parallel to, or coaxial with, the central longitudinal axis 20 of the drive shaft 5. Explicitly, the brake calliper 12 is arranged to allow movement of at least one selected from a group comprising at least two members, wherein one of the members may be the brake calliper and another one of the members may be the drive shaft 5 together with the brake disc 6.

In this example of the invention, the direction of movement of the drive shaft 5 and the brake disc 6 is away from the wall 8 when the drive shaft 5 and the brake disc 6 are removed from the propulsion pod 1 and the direction of said movement is towards the wall 8 when the drive shaft 5 and the brake disc 6 are inserted into the propulsion pod 1.

Figure 1b illustrates a further exemplifying propulsion pod 1 according to the embodiments herein. The further exemplifying pod 1 of Figure 1b is similar to the exemplifying pod 1 of Figure 1a. In the following description, emphasis is therefore put on the differences between these two pods.

With the propulsion pod 1 of Figure 1b, the propulsion motor 4 is located in the inaccessible compartment C2. Likewise, the brake disc 6 is located between the wall 8 and the propulsion motor 4. E.g. in order to protect the propulsion motor 4 and the brake disc 6 from water, the propulsion pod 1 may comprise a further wall 8a, which is located between the propulsion motor 4 and the propeller 7. In this manner a further compartment C3 is formed within the pod 1, but in the vicinity of the propeller 7. Hence, in this example the propulsion motor 4 and the brake calliper 12 face the same face of the wall 8, i.e. the second face 10.

Furthermore, Figure 1b illustrates that the wall 8 has at least one portion 101, 102 that is demountable. Said at least one portion 101, 102 is adapted to allow the brake calliper 12 to pass therethrough. In this manner, e.g. maintenance personnel may be allowed to perform maintenance while demounting said at least one portion 101, 102 of the wall 8 and putting the calliper shaft 11, the brake calliper 12, and possibly also said at least one portion 101, 102 on a bottom surface (not shown) of the pod 1, such as a floor of the pod 1.

Said at least one portion 101 may include a circular through hole (not shown) adapted to rotatably fit the calliper shaft 11 as further detailed below. Said at least one portion 101 may then exclude portions of the wall 8 that the drive shaft 5 is mounted in, or at. An advantage is hence that demounting of said at least one portion 101 does not affect bearings etc. in connection with the drive shaft 5.

Moreover, said at least one portion 102 may include a bearing (not shown) adapted to receive the drive shaft 5, which may extend through the wall 8 as shown. Alternatively, the drive shaft 5 is mounted at, or in, the wall 8 while refraining from extending through the wall 8. In this case, it may be that said at least one portion 102 is adapted to allow the drive shaft 5 and the brake disc 6 to pass through an opening in the wall 8 that is covered by said at least one portion 102. An advantage is therefore that the drive shaft 5 and the brake disc 6 and possibly also the propulsion motor 4 may be pulled out of the inaccessible compartment C2 if desired.

In the example of Figure 1b, the direction of movement of the brake calliper 12 is towards and through the wall 8 when the brake calliper 12 and the calliper shaft 11 are demounted from the propulsion pod 1. As mentioned before, demounting of the brake calliper 12 assumes that the brake calliper 12 first is put in the second position, and then demounted from the inaccessible compartment C2.

Optionally, the brake calliper 12 may also be rotatably connected (not shown) to the further wall 8a. In this manner, the brake calliper 12 may be more rigidly mounted.

Figure 1a may be provided with a portion similar to said at least one portion 101, 102, but is left out for ease of description and to avoid undue repetition.

Figure 2 is a simplified view of the propulsion pod 1 of Figure 1a for the purpose of illustrating the second position of the brake calliper 12. According to Figure 2, the brake calliper 12 has been rotated to the second position by means of rotation of the calliper shaft 11 about a central longitudinal axis 21 thereof. In the second position, the brake disc 6, along with the drive shaft 5, is allowed to move freely, unobstructed by the brake calliper 12 along a direction A1 parallel to the central longitudinal axis 20 of the drive shaft 5.

In the second position, a distance g between a portion of the brake calliper 12 that is closest to the drive shaft 5, and the centre of the drive shaft 5/brake disc 6 is equal to or greater than the largest diameter d of the brake disc 6, i.e. the outer diameter of a circular brake disc 6.

When the brake calliper 12 is moved to, and held in, the second position, removal and insertion of the drive shaft 5 and the brake disc 6 is possible, in particular thanks to that the brake calliper 12 - when in the second position - does not prevent motion of the drive shaft 5 and the brake disc 6 in the direction A1.

With reference to Figure 3 and Figure 4, the first and second positions of the brake calliper 12 are illustrated for a case when the calliper shaft 11 is rotated to rotate a calliper from the first position to the second position. In this case, the wall 8 may comprise a circular through hole, provided with seals and a low friction bearing surface if necessary (not shown) for rotatable mounting of the calliper shaft 11 in the wall 8.

As shown in Figure 3, when the brake calliper 12 is arranged in the first position, braking of the brake disc 6 is possible as the brake calliper 12 at least partially encloses the brake disc 6.

In contrast thereto, Figure 4 illustrates the brake calliper 12 when arranged in the second position. In order to reach the second position, the brake calliper 12 has been rotated 40 by rotation of the calliper shaft 11. In the second position of the brake calliper 12, braking of the brake disc 6 is not possible. Instead the brake disc 6 and the drive shaft 5 are able to be moved along the central longitudinal axis 20 of the drive shaft as the brake disc 6 is no longer obstructed by the brake calliper 12 when an attempt is made to move the brake disc 6 along the direction A1. When the brake calliper 12 interferes with the brake disc 6 movement along the central longitudinal axis 20 it is not possible. Hence, it is for example not possible to remove the drive shaft 5 and the brake disc 6 as a complete assembly from the propulsion pod 1.

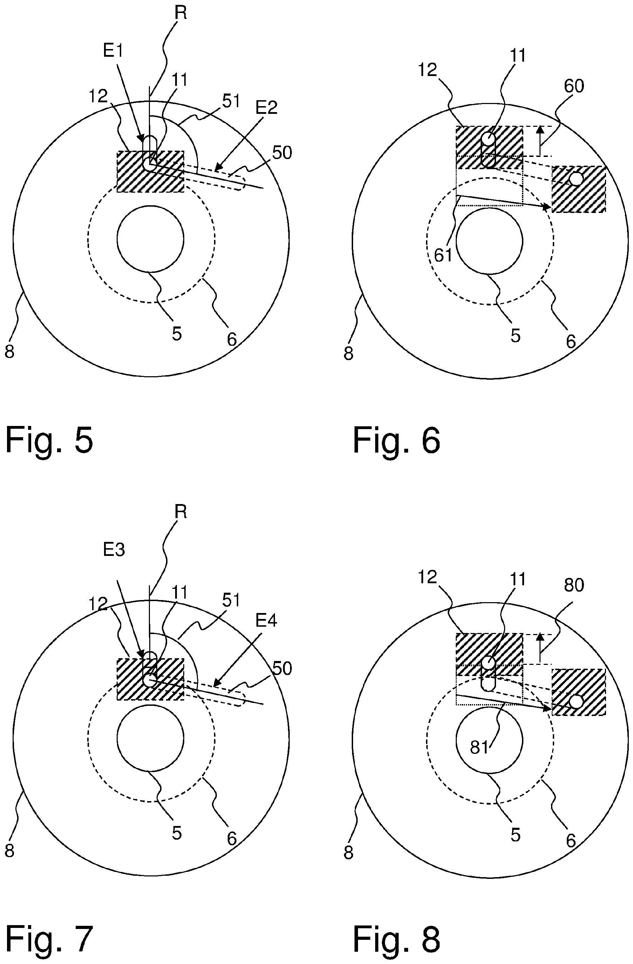

Figure 5 and Figure 6 illustrate a further embodiment of the invention in which the calliper shaft 11 is translated, or displaced, from the first position to the second position, e.g. by sliding the brake calliper 12 to the side. In this scenario, the wall 8 is provided with at least one slot for guiding the calliper shaft 11 when the brake calliper 12 is displaced between the first and second positions. Said at least one slot 50 may have an elongated shape, having a longitudinal axis. It may be straight as shown in the figures or curved or be formed of a combination of straight and curved portions.

In a further embodiment of the invention, the wall 8 is provided with at least one further slot, i.e. the wall 8 has two or more slots, and at least one further calliper shaft (not shown) may be fixedly mounted to the brake calliper 12. The brake calliper 12 may then be guided, by at least one of the calliper shaft 11 and a further calliper shaft being used to convey the brake calliper 12, from a first position, in which the brake calliper 12 obstructs movement of the brake disc 6 in the direction of the central longitudinal axis of the drive shaft, to a second position, in which the brake calliper does not obstruct such movement.

As a further example, the brake calliper 12 may be provided with two or more calliper shafts. However, the wall may still be provided with only one slot which allows the brake calliper to be manipulated from the portion C1 at the other side of the wall 8. For guiding of the other calliper shaft(s), which do(es) not extend through the wall 8, the wall 8 may be provided with a respective groove, or recess. This means that it may be enough that only one calliper shaft 12 is actuatable from the first face 9 of the wall 8, rather than all existing calliper shafts.

In a first example of a slot E1 illustrated in Figure 5 and Figure 6 with solid lines, the longitudinal axis of said at least one slot 50 may be arranged in the wall 8, to coincide with a radial direction R of the brake disc 6.

In a second example of a slot E2 illustrated in Figure 5 and Figure 6 by dashed lines, the longitudinal axis of said at least one slot 50 may be arranged at an angle 51 with the radial direction R of the brake disc 6. The angle may have any suitable value as long as movement by rotation and/or translation between the first and second positions conveys the brake calliper 12 from a position, e.g. the first position, where it obstructs movement of the brake disc to a position, e.g. the second position, where it no longer obstructs such movement of the brake disc and/or movement of the brake calliper 12.

When the brake calliper 12 is in the first position, the brake calliper 12 may be located at a first end of said at least one slot 50, which first end is preferably be located in the wall 8 such that the brake calliper 12 may brake the brake disc 6. Optionally, the calliper shaft can be arranged to be rotatable in the slot or at the one or more ends of the slot so the first and second positions of the brake calliper can be reached by a combination of translation and rotation of a calliper shaft.

When the brake calliper 12 is in the second position, the brake calliper 12 may be located at a second position, preferably at the second end of said at least one slot 50. The second position of said at least one slot 50 is located in the wall 8 such that the brake disc 6 may pass, optionally depending on angle of rotation of the calliper shaft 11, the brake calliper 12 to allow removal and/or insertion of the drive shaft 5 and the brake disc 6 from/into the propulsion pod 1.

As shown in Figure 5, when the brake calliper 12 is arranged in the first position, braking of the brake disc 6 is possible in the same or similar manner as in Figure 3.

Figure 6 illustrates the brake calliper 12 when arranged in the second position. In order to reach the second position, the brake calliper 12 may have been translated 61, e.g. while sliding, and optionally rotating, the calliper shaft 11 in the slot. As in the example of Figure 4, in the second position of the brake calliper 12, braking of the brake disc 6 is not possible. Instead the drive shaft 5 and the brake disc 6 and/or the brake calliper 12 are able to be moved along the central longitudinal axis 20 of the drive shaft such as to facilitate maintenance thereof.

In the example shown in figures 4 to 6 the calliper shaft 11 is outside the outer circumference of the brake disc 6 when the brake calliper is in the first position and the calliper shaft 11 remains outside the outer circumference of the brake disc 6 when the brake calliper is in the second position.

However, in a further embodiment of the invention, shown in Figure 7 and Figure 8, it is possible that the calliper shaft 11 is located inside the outer circumference of the brake disc 6 when the brake calliper is in the first position and the calliper shaft 11 is outside the outer circumference of the brake disc 6 when the brake calliper is in the second position.

An exemplifying slot E3 is shown in Figure 7. As illustrated in Figure 7, the calliper shaft 11 is located inside the outer circumference of the brake disc 6 when the brake calliper 12 is in the first position. In Figure 8, the brake calliper 12 is in the second position after being displaced 80.

Another exemplifying slot E4 is illustrated in Figure 7, where the brake calliper 12 is in the first position and in Figure 8, the brake calliper 12 is in the second position after being displaced 81.

In the Figures above, the exemplifying slots E1, E2, E3, E4 may be formed as straight recesses as shown, or the slots may be formed to follow - not shown in the Figures - any suitable curve, graph, circular segment or the like. The slot shall preferably avoid that the calliper is caused to collide with e.g. the drive shaft 5 or other parts in the pod 1 while being conveyed between the first and second positions.

Preferably, in all embodiment of the invention, the brake calliper 12 is lockable in the first position and/or in the second position. When the brake calliper 12 is lockable in the first position, it can be avoided that the brake calliper 12 unintentionally leaves the first position, e.g. during normal operation when braking of the brake disc 6 may be desired. Should the brake calliper 12 leave the first position during normal operation, it would no longer be possible to brake the brake disc. Likewise, when the brake calliper 12 is lockable in the second position, it can be avoided that the brake calliper unintentionally leaves the second position, e.g. during maintenance of e.g. the drive shaft and/or the brake disc.

Each embodiment, example or feature disclosed herein may, when physically possible, be combined with one or more other embodiments, examples, or features disclosed herein. While it may be contemplated that many different alterations, modifications may become apparent for the skilled person, the scope is defined by the appended set of claims.

## Claims

1. A propulsion pod (1) for housing a drive shaft (5), said drive shaft (5) having a central longitudinal axis, wherein the propulsion pod (1) comprises:
a housing (13),
a wall (8) dividing the housing (13) into a first portion (C1) and a second portion (C2), the first and second portions (C1, C2) referring to a respective space of a volume enclosed by the housing (13), wherein only the first portion (C1) of the propulsion pod (1) is easily accessible during maintenance of the propulsion pod (1) and the second portion (C2) of the propulsion pod (1) is generally not accessible, the wall (8) being suitable for rotatably mounting the drive shaft (5), wherein the drive shaft (5) is provided with a brake disc (6),
a calliper shaft (11), and
a brake calliper (12), mounted on the calliper shaft (11) in the second portion (C2) on one side of the wall (8), wherein the propulsion pod (1) is **characterized in that** the brake calliper (12) is movable between a first position and a second position by rotation and/or translation of the calliper shaft (11) by means of the calliper shaft (11),
wherein the brake calliper (12) in the first position is arranged to allow braking and/or holding of the drive shaft (5) and the brake disc (6),
wherein the brake calliper (12) in the second position is arranged to allow movement of at least one of the brake calliper (12) and the drive shaft (5) together with the brake disc (6) in a direction which is parallel with a central longitudinal axis (20) of the drive shaft (5),
wherein the wall (8) has a first face (9) in the first portion (C1), and
wherein a portion of the calliper shaft (11) is projecting through the wall (8) and is accessible at the first face (9) in the first portion (C1), and
the calliper shaft (11) extends through the wall (8), wherein the calliper shaft (11) is actuatable from the first face of the wall (8) by means of the portion of the calliper shaft (11), whereby the calliper shaft (11) is rotatable and/or translatable to cause the brake calliper (12) to move between the first and second positions.

2. The propulsion pod (1) according to claim 1, wherein the brake calliper (12) is fixedly mounted on the calliper shaft (11).

3. The propulsion pod (1) according to claim 1 or 2, wherein the wall (8) comprises a through hole for rotatable mounting of the calliper shaft (11).

4. The propulsion pod (1) according to claim 1 or 2, wherein the wall (8) is provided with at least one slot for guiding the calliper shaft (11) when the brake calliper (12) is displaced between the first and second positions.

5. The propulsion pod (1) according to any one of the preceding claims, wherein the direction of said movement of the drive shaft (5) and the brake disc (6) is away from the wall (8) when the drive shaft (5) and the brake disc (6) are removed from the propulsion pod (1).

6. The propulsion pod (1) according to any one of claims 1-4, wherein the direction of said movement of the brake calliper (12) is towards and through the wall (8) when the brake calliper (12) and the calliper shaft (11) are demounted from the propulsion pod (1).

7. The propulsion pod (1) according to any one of the preceding claims, wherein the brake calliper (12) is lockable in the first position and/or in the second position.

8. The propulsion pod (1) according to any one of the preceding claims, wherein the calliper shaft (11) is parallel to the drive shaft (5).

9. The propulsion pod (1) according to any one of the preceding claims, wherein the calliper shaft (11) is mounted at a radial position which is outside the outer circumference of the brake disc (6).

10. The propulsion pod (1) according to any one of claims 1-8, wherein the calliper shaft (11) is mounted at a radial position which is inside the outer circumference of the brake disc (6).

11. The propulsion pod (1) according to any one of claims 1-8, wherein the calliper shaft (11) is inside the outer circumference of the brake disc (6) when the brake calliper is in the first position and the calliper shaft (11) is outside the outer circumference of the brake disc (6) when the brake calliper is in the second position.

12. The propulsion pod (1) according to any one of the preceding claims, wherein the wall (8) has at least one portion (101, 102) that is demountable, wherein said at least one portion (101, 102) is adapted to allow the brake calliper (12) to pass therethrough.

13. The propulsion pod (1) according to any one of the preceding claims, wherein the calliper shaft (11) and the brake calliper (12) are formed as an integral unit.

## Patentansprüche

1. Antriebsgondel (1) zur Aufnahme einer Antriebswelle (5), wobei die Antriebswelle (5) eine zentrale Längsachse aufweist, wobei die Antriebsgondel (1) umfasst:
ein Gehäuse (13),
eine das Gehäuse (13) in einem ersten Abschnitt (C1) und einen zweiten Abschnitt (C2) unterteilende Wand (8), wobei der erste Abschnitt und der zweite Abschnitt (C1, C2) sich auf einen jeweiligen Raum eines durch das Gehäuse (13) umschlossenen Volumens beziehen, wobei nur der erste Abschnitt (C1) der Antriebsgondel (1) während Wartungsarbeiten an der Antriebsgondel (1) leicht zugänglich ist und der zweite Abschnitt (C2) der Antriebsgondel (1) im Allgemeinen nicht leicht zugänglich ist, wobei die Wand (8) für die drehbare Anbringung der Antriebswelle (5) geeignet ist, wobei die Antriebswelle (5) mit einer Bremsscheibe (6) versehen ist,
eine Sattelwelle (11), und
einen an der Sattelwelle (11) in dem zweiten Abschnitt (C2) an einer Seite der Wand (8) angebrachten Bremssattel (12), wobei die Antriebsgondel (1) **dadurch gekennzeichnet ist, dass** der Bremssattel (12) durch Rotation und/oder Translation der Sattelwelle (11) vermittels der Sattelwelle (11) zwischen einer ersten Position und einer zweiten Position bewegbar ist,
wobei der Bremssattel (12) in der ersten Position dazu angeordnet ist, ein Bremsen und/oder Halten der Antriebswelle (5) und der Bremsscheibe (6) zu ermöglichen,
wobei der Bremssattel (12) in der zweiten Position dazu angeordnet ist, eine Bewegung des Bremssattels (12) und/oder der Antriebswelle (5) zusammen mit der Bremsscheibe (6) in einer Richtung parallel zu einer zentralen Längsachse (20) der Antriebswelle (5) zu ermöglichen,
wobei die Wand (8) eine erste Seite (9) in dem ersten Abschnitt (C1) aufweist, und
wobei ein Abschnitt der Sattelwelle (11) sich durch die Wand (8) hindurch erstreckt und an der ersten Seite (9) in dem ersten Abschnitt (C1) zugänglich ist, und
die Sattelwelle (11) sich durch die Wand (8) erstreckt, wobei die Sattelwelle (11) von der ersten Seite der Wand (8) her vermittels des Abschnitts der Sattelwelle (11) zum Bewirken, dass der Bremssattel (12) sich zwischen der ersten Position und der zweiten Position bewegt, drehbar und/oder in Translation bewegbar ist.

2. Antriebsgondel (1) nach Anspruch 1, wobei der Bremssattel (12) an der Sattelwelle (11) fest angebracht ist.

3. Antriebsgondel (1) nach Anspruch 1 oder 2, wobei die Wand (8) ein Durchgangsloch zur drehbaren Anbringung der Sattelwelle (11) umfasst.

4. Antriebsgondel (1) nach Anspruch 1 oder 2, wobei die Wand (8) wenigstens einen Schlitz zum Führen der Sattelwelle (11), wenn der Bremssattel (12) zwischen der ersten Position und der zweiten Position bewegt wird, aufweist.

5. Antriebsgondel (1) nach einem der vorangehenden Ansprüche, wobei die Richtung der Bewegung der Antriebswelle (5) und der Bremsscheibe (6) in Richtung von der Wand (8) weg ist, wenn die Antriebswelle (5) und die Bremsscheibe (6) von der Antriebsgondel (1) entfernt werden.

6. Antriebsgondel (1) nach einem der Ansprüche 1 bis 4, wobei die Richtung der Bewegung des Bremssattels (12) auf die Wand (8) zu und durch diese hindurch ist, wenn der Bremssattel (12) und die Sattelwelle (11) von der Antriebsgondel (1) abmontiert werden.

7. Antriebsgondel (1) nach einem der vorangehenden Ansprüche, wobei der Bremssattel (12) in der ersten Position und/oder in der zweiten Position blockierbar ist.

8. Antriebsgondel (1) nach einem der vorangehenden Ansprüche, wobei die Sattelwelle (11) parallel zur Antriebswelle (5) ist.

9. Antriebsgondel (1) nach einem der vorangehenden Ansprüche, wobei die Sattelwelle (11) an einer radialen Position außerhalb des Außenumfangs der Bremsscheibe (6) angebracht ist.

10. Antriebsgondel (1) nach einem der Ansprüche 1 bis 8, wobei die Sattelwelle (11) an einer radialen Position innerhalb des Außenumfangs der Bremsscheibe (6) angebracht ist.

11. Antriebsgondel (1) nach einem der Ansprüche 1 bis 8, wobei die Sattelwelle (11) innerhalb des Außenumfangs der Bremsscheibe (6) ist, wenn der Bremssattel in der ersten Position ist, und die Sattelwelle (11) außerhalb des Außenumfangs der Bremsscheibe (6) ist, wenn der Bremssattel in der zweiten Position ist.

12. Antriebsgondel (1) nach einem der vorangehenden Ansprüche, wobei die Wand (8) wenigstens einen abmontierbaren Abschnitt (101, 102) aufweist, wobei der wenigstens eine Abschnitt (101, 102) dazu ausgebildet ist, ein Hindurchbewegen des Bremssattels (12) durch diesen zu ermöglichen.

13. Antriebsgondel nach einem der vorangehenden Ansprüche, wobei die Sattelwelle (11) und der Bremssattel (12) als eine integrale Einheit ausgebildet sind.

## Revendications

1. Nacelle de propulsion (1) destinée à loger un arbre d'entraînement (5), ledit arbre d'entraînement (5) ayant un axe longitudinal central, la nacelle de propulsion (1) comprenant :
un logement (13),
une paroi (8) divisant le logement (13) en une première partie (C1) et une seconde partie (C2), les première et seconde parties (C1, C2) se référant à un espace respectif d'un volume enfermé par le logement (13), seule la première partie (C1) de la nacelle de propulsion (1) étant facilement accessible pendant la maintenance de la nacelle de propulsion (1) et la seconde partie (C2) de la nacelle de propulsion (1) n'étant généralement pas accessible, la paroi (8) étant appropriée pour monter de manière rotative l'arbre d'entraînement (5), l'arbre d'entraînement (5) étant pourvu d'un disque de frein (6),
un arbre d'étrier (11), et
un étrier de frein (12), monté sur l'arbre d'étrier (11) dans la seconde partie (C2) sur un côté de la paroi (8), la nacelle de propulsion (1) étant **caractérisée en ce que** l'étrier de frein (12) est mobile entre une première position et une seconde position par rotation et/ou translation de l'arbre d'étrier (11) au moyen de l'arbre d'étrier (11),
l'étrier de frein (12) dans la première position étant conçu pour permettre le freinage et/ou le maintien de l'arbre d'entraînement (5) et du disque de frein (6),
l'étrier de frein (12) dans la seconde position étant conçu pour permettre le mouvement d'au moins l'un de l'étrier de frein (12) et de l'arbre d'entraînement (5) conjointement avec le disque de frein (6) dans une direction qui est parallèle à un axe longitudinal central (20) de l'arbre d'entraînement (5),
la paroi (8) ayant une première face (9) dans la première partie (C1), et
une partie de l'arbre d'étrier (11) faisant saillie à travers la paroi (8) et étant accessible au niveau de la première face (9) dans la première partie (C1), et
l'arbre d'étrier (11) s'étendant à travers la paroi (8), l'arbre d'étrier (11) pouvant être actionné à partir de la première face de la paroi (8) au moyen de la partie de l'arbre d'étrier (11), moyennant quoi l'arbre d'étrier (11) peut tourner et/ou être translaté pour amener l'étrier de frein (12) à se déplacer entre les première et seconde positions.

2. Nacelle de propulsion (1) selon la revendication 1, l'étrier de frein (12) étant fixé à demeure sur l'arbre d'étrier (11).

3. Nacelle de propulsion (1) selon la revendication 1 ou 2, la paroi (8) comprenant un trou traversant pour le montage rotatif de l'arbre d'étrier (11).

4. Nacelle de propulsion (1) selon la revendication 1 ou 2, la paroi (8) étant pourvue d'au moins une fente pour guider l'arbre d'étrier (11) lorsque l'étrier de frein (12) est déplacé entre les première et seconde positions.

5. Nacelle de propulsion (1) selon l'une quelconque des revendications précédentes, la direction dudit mouvement de l'arbre d'entraînement (5) et du disque de frein (6) étant à l'opposé de la paroi (8) lorsque l'arbre d'entraînement (5) et le disque de frein (6) sont retirés de la nacelle de propulsion (1).

6. Nacelle de propulsion (1) selon l'une quelconque des revendications 1 à 4, la direction dudit mouvement de l'étrier de frein (12) étant vers et à travers la paroi (8) lorsque l'étrier de frein (12) et l'arbre d'étrier (11) sont démontés de la nacelle de propulsion (1).

7. Nacelle de propulsion (1) selon l'une quelconque des revendications précédentes, l'étrier de frein (12) pouvant être verrouillé dans la première position et/ou dans la seconde position.

8. Nacelle de propulsion (1) selon l'une quelconque des revendications précédentes, l'arbre d'étrier (11) étant parallèle à l'arbre d'entraînement (5).

9. Nacelle de propulsion (1) selon l'une quelconque des revendications précédentes, l'arbre d'étrier (11) étant monté au niveau d'une position radiale qui est à l'extérieur de la circonférence extérieure du disque de frein (6).

10. Nacelle de propulsion (1) selon l'une quelconque des revendications 1 à 8, l'arbre d'étrier (11) étant monté au niveau d'une position radiale qui est à l'extérieur de la circonférence extérieure du disque de frein (6).

11. Nacelle de propulsion (1) selon l'une quelconque des revendications 1 à 8, l'arbre d'étrier (11) étant à l'intérieur de la circonférence extérieure du disque de frein (6) lorsque l'étrier de frein est dans la première position et l'arbre d'étrier (11) étant à l'extérieur de la circonférence extérieure du disque de frein (6) lorsque l'étrier de frein est dans la seconde position.

12. Nacelle de propulsion (1) selon l'une quelconque des revendications précédentes, la paroi (8) ayant au moins une partie (101, 102) qui est démontable, ladite au moins une partie (101, 102) étant conçue pour permettre à l'étrier de frein (12) de passer au travers.

13. Nacelle de propulsion (1) selon l'une quelconque des revendications précédentes, l'arbre d'étrier (11) et l'étrier de frein (12) étant formés d'un seul tenant.
